# EUROPÄISCHE PATENTSCHRIFT

(11) **EP 0 767 731 B1**
(45) Veröffentlichungstag und Bekanntmachung des Hinweises auf die Patenterteilung: **30.10.2002**
(21) Anmeldenummer: 96906701.6
(22) Anmeldetag: 21.03.1996
(51) Int. Cl.: B29C 47/02

(54) **VERFAHREN UND VORRICHTUNG ZUM BESTÜCKEN VON EXTRUDATEN MIT BEFESTIGUNGSELEMENTEN ODER DGL.**
PROCESS AND DEVICE FOR FITTING EXTRUDATES WITH SECURING COMPONENTS OR THE LIKE
PROCEDE ET DISPOSITIF PERMETTANT DE MUNIR DES EXTRUDATS D'ELEMENTS DE FIXATION OU SIMILAIRE

(30) Priorität: 26.04.1995 DE 19515334
(43) Veröffentlichungstag der Anmeldung: 16.04.1997
(73) Patentinhaber: SAAR-GUMMIWERK GmbH, 66687 Wadern (DE)
(72) Erfinder: SEHR, Ralf, D-66679 Losheim (DE); KOTZ, Stefan, D-66663 Merzig (DE)
(74) Vertreter: Schulte, Jörg, Dipl.-Ing.
(86) Internationale Anmeldenummer: DE9600526
(87) Internationale Veröffentlichungsnummer: WO96033854

(56) Entgegenhaltungen:
- DE-A- 3 742 416
- US-A- 2 962 813
- US-A- 3 826 285
- PATENT ABSTRACTS OF JAPAN vol. 007, no. 145 (M-224), 24.Juni 1983 & JP,A,58 056835 (MATSUSHITA DENKO KK), 4.April 1983,

## Beschreibung

Die Erfindung betrifft ein Verfahren und Vorrichtung zum serienweisen Bestükken von Extrudaten mit Befestigungselementen, die dem Extrusionswerkzeug vereinzelt zugeführt und in dieses eingebracht sowie im Extrudat verankert werden.

Um ein Extrudat mit Befestigungselementen oder dgl. auszurüsten, war bisher folgende Vorgehensweise üblich: Nach dem Extrudieren wurde das Extrudat in einer gesonderten Vorrichtung gebohrt oder gestanzt, um entsprechende Aufnahmemöglichkeiten für die Befestigungselemente oder dgl. zu schaffen. Anschließend wurden dann die anzubringenden, lose vorliegenden Befestigungselemente von Hand oder auch schon mit maschinellen Hilfsmitteln in die entsprechende Position am Extrudat gebracht.

Die Arbeitsschritte Bohren bzw. Stanzen sowie das nachfolgende manuelle Bestücken des Extrudates mit den Befestigungselementen oder dgl., gegebenenfalls auch mit maschinellen Hilfsmitteln, sind sehr zeitraubend und damit zwangsläufig kostenintensiv. Aus der DE-A1-37 42 416.5 ist ein erster Automatisierungsschritt bekannt. Die Befestigungselemente werden in den noch weichen Kunststoff eingeführt und in diesen eingebettet. Nachteilig ist, dass nur geringere Abmessungen und gleiche Form aufweisende Elemente so verarbeitet werden können. Auch nach dem aus der US-PS 3 876 285 bekannten Verfahren bestehen diese Probleme.

Der Erfindung liegt deshalb die Aufgabe zugrunde, ein Verfahren und eine Vorrichtung zu entwickeln, mit denen auch eine andere Form aufweisende Befestigungselemente gezielt im Extrudat zu verankern sind.

Diese Aufgabe wird erfindungsgemäß dadurch gelöst, dass die Befestigungselemente nur außerhalb des späteren Funktionsbereiches im Extrudat verankert und hierzu ausgerichtet in die Warteposition vor dem Extrusionswerkzeug verbracht und dann während des Extrusionsvorganges nur im vorgesehenen Abschnitt mit dem Extrudat verbunden werden.

Dadurch, dass gemäß der Erfindung die Befestigungselemente oder dgl. ausgerichtet vorgehalten werden, können sie gezielt bereits während des Produktionsprozesses der Extrudate nur im vorgesehenen Abschnitt in das Material eingebunden werden. Damit ist ein Verbinden von wirklichen Befestigungselementen möglich, während man bisher nur die Hilfsmittel in das Extrudat eingebunden hat. Der spätere Funktionsbereich kann vom Extrudat freigehalten und entsprechend später aktiv eingesetzt werden. Es hat sich zudem gezeigt, dass die gemäß der erfindungsgemäßen Verfahrensweise in das Extrudat eingebundenen Elemente einen vergleichsweise festen Sitz aufweisen. Unerwünschte Verdrehungen und Verschiebungen der Befestigungselemente sind nicht mehr festzustellen. Die Befestigungselemente können lose als Einzelelemente oder auch miteinander verbunden in das Extrudat eingearbeitet werden.

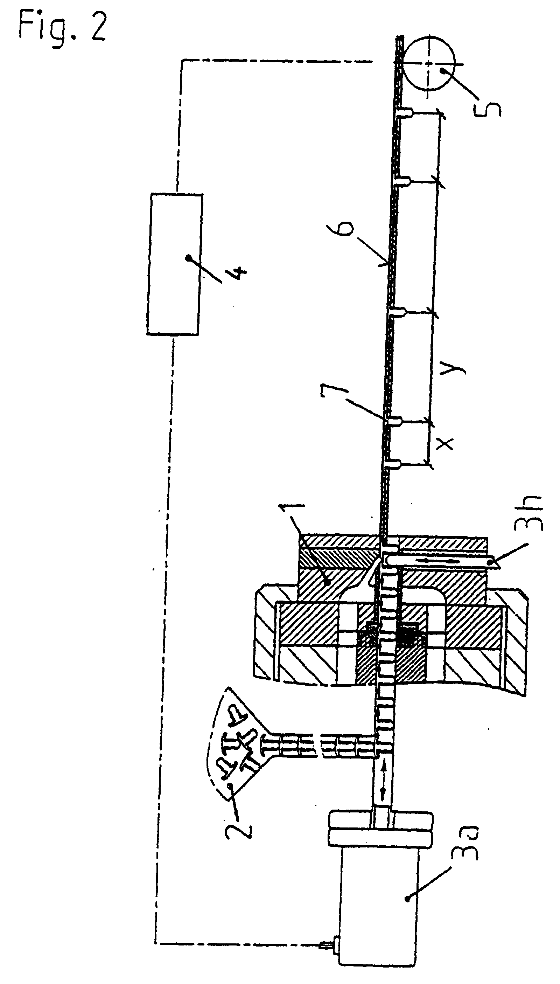

Der Verfahrensablauf gestaltet sich dabei in einer dementsprechenden Vorrichtung (Fig. 2/2) derart, dass die Befestigungselemente dem Extrusionswerkzeug vereinzelt in eine Warteposition zugeführt und in das Extrudat bis auf den Funktionsbereich eingebracht und somit im Extrudat festgelegt werden, wobei während des Extrusionsvorganges von den Befestigungselementen der Kopf im Inneren der Extrusionswandung zur Anordnung kommt und durch Umspritzen mit dem Extrudat verankert wird. Vor dem Austritt der Elemente aus diesem System (Positionieren) verweilen diese praktisch in einer Warteposition. Der durch ein spezielles Weg-Meßsystem (5) erfasste Ablaufweg des Extrudates (6) erlaubt es, bei einer entsprechenden Abbildung des Ablaufweges auf ein elektrisches Signal, dass dieses als Eingangssignal einer Steuerung eine Zuführeinheit (3a) aktiviert. Dieses taktet das in Warteposition befindliche Befestigungselement oder dgl. derart, dass es aus seiner Warteposition dem Massestrom (Extrudat) dann zugeführt wird, wenn der entsprechende Abstand zum Vorgänger erreicht ist. Dabei geht das Befestigungselement (7) oder dgl. eine feste Verbindung mit dem Extrudat ein. Die Befestigungselemente oder dgl. bereits während des Extrudierens, und zwar schon im Extrusionswerkzeug bzw. Spritzkopf, in das Extrudat zu positionieren bringt folgende entscheidende Vorteile:
- Bohren bzw. Stanzen entfällt.
- Positionieren der Befestigungselemente oder dgl. von Hand entfällt.
- Variables Positionieren der Befestigungselemente oder dgl. möglich mit einer elektrischen Steuerung mit Weg-Meßsystem und Setzgerät.
- Sichere Verbindung Befestigungselement/Extrudat dadurch, dass das Befestigungselement oder dgl. bis auf dessen Funktionsbereich vom Extrudat umspritzt oder überspritzt (versenkt) werden darf.
- Optische Verbesserung.

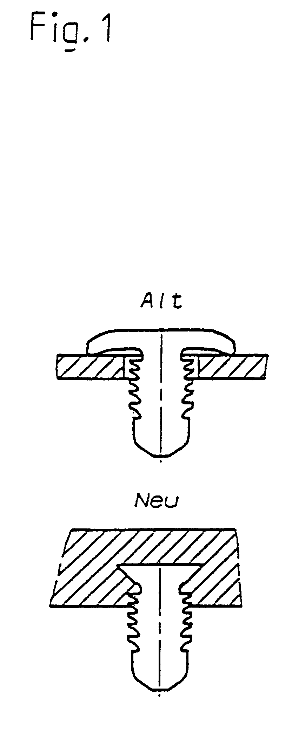

Des weiteren wird es möglich bei Hohlkammerextrudaten eine Funktionseinschränkung dadurch zu verhindern, dass der Kopf des Befestigungselementes im Innern der Extrudatwandung zur Anordnung (Fig. 1/2) kommt und aufgrund dieser Umspritzung eine verhältnismäßig kleine Hinterhakungsfläche am Befestigungselement oder dgl. notwendig wird, wie aus Fig. 1/2 für ein ausgewähltes Befestigungselement ersichtlich ist.

Im Folgenden wird ein Ausführungsbeispiel für eine dem erfindungsgemäßen Verfahren entsprechenden Vorrichtung anhand einer Anlagenskizze Fig. 2/2 näher erläutert.

In einem Förder- und Sortiersystem (2) werden die losen, zu befestigenden Elemente bevorratet und in einem senkrechten Zuführkanal bereits so angeordnet, dass sie beim Eintritt in den horizontalen Zuführkanal jeweils ihre für die Warteposition erforderliche Stellung einnehmen.

Die Taktung für den Eintritt ins Extrusionswerkzeug (1) erfolgt über eine Zuführeinheit (3a), die elektronisch, pneumatisch oder hydraulisch wirken kann. Die Taktsignale werden dabei in einer Steuereinheit (4) gebildet, die einerseits auf einem Weg-Meßsignal - abgegriffen am ablaufenden Extrudat (6) - und andererseits auf Abstandsvorgaben, die in der Steuerung gespeichert bzw. an dieser eingestellt werden müssen, beruhen.

Der Aufbau der Vorrichtung sowie dessen Wirkprinzip ist dabei unabhängig von spezifischen Systemkomponenten. So ist es für das Wirkprinzip ohne Belang, ob das Weg-Meßsystem (5) ein spezielles; ob die Signalübertragungen analog oder digital; ob die Zuführeinheit (3a) elektronisch, pneumatisch oder hydraulisch arbeitet oder ob die Steuerung programmierbar oder auf eine sonstige Art und Weise einstellbar ist.

## Patentansprüche

1. Verfahren zum serienweisen Bestücken von Extrudaten mit Befestigungselementen, die dem Extrusionswerkzeug vereinzelt in eine Warteposition zugeführt und in das Extrudat bis auf den Funktionsbereich eingebracht und somit im Extrudat festgelegt werden,
**dadurch gekennzeichnet,**
**dass** während des Extrusionsvorganges von den Befestigungselementen der Kopf im Inneren der Extrusionswandung zur Anordnung kommt und durch Umspritzen mit dem Extrudat verankert wird.

2. Verfahren nach Anspruch 1,
**dadurch gekennzeichnet,**
**dass** die Zuführung der Befestigungselemente nach der Ausrichtung und dem Extrusionsvorgang abgestimmt über eine Steuereinheit vorgenommen wird, die bezüglich ihrer unter anderem die Abstände der Befestigungselemente vorgebenden Taktsignale eingestellt wird.

3. Verfahren nach Anspruch 1,
**dadurch gekennzeichnet,**
**dass** die Befestigungselemente über eine Steuereinheit geregelt der Zuführeinheit zugeführt werden, wobei die Abstände der Befestigungselemente unter Berücksichtigung eines am laufenden Extrudat abgegriffenen Weg-Meßsignals und andererseits in der Steuereinheit gespeicherter oder an dieser einstellbarer Abstandsvorgaben beruhen.

4. Verfahren nach Anspruch 1,
**dadurch gekennzeichnet,**
**dass** die Befestigungselemente lose als Einzelelemente oder miteinander verbunden in das Extrudat eingearbeitet werden.

5. Vorrichtung zum serienweisen Bestücken von Extrudaten (6) mit Befestigungselementen (7), mit einem Extrusionswerkzeug (1), zum Formen eines Extrudates (6) und mit einem Förder- und Sortiersystem (2), dessen letzter Mündungskanal die losen Befestigungselemente (7) in unmittelbarer Nähe des Extrusionswerkzeuges (1) ausgerichtet für ihre vorgesehene Warteposition enthält sowie über synchron getaktete Zuführ- (3a) und Setzeinrichtung (3b) am Extrusionswerkzeug (1) verfügt,
**dadurch gekennzeichnet,**
**dass** die Zuführ- (3a) und Setzeinrichtung (3b) mit einer die Taktimpulse auslösenden Steuereinheit (4) verbunden ist, die ihrerseits direkt an eine, vom Extrudat (6) überlaufene Weg-Messeinrichtung (5) angeschlossen und bezüglich der Taktsignale einstellbar ist.

6. Vorrichtung nach Anspruch 3,
**dadurch gekennzeichnet,**
**dass** die Setzeinrichtung (3b) eine beim Extrudieren nur den Kopf des Befestigungselementes (7) für das Um- und Überspritzen vorhaltende Form aufweist.

## Claims

1. Method for large-scale equipping of extrudates with fastening elements which are individually fed to the extrusion die in a queuing position and introduced into the extrudate up to the operating region and thus fastened in the extrudate, **characterised in that** during the extrusion process the head of the fastening elements is arranged in the interior of the extrusion wall and is anchored by moulding-in with the extrudate.

2. Method according to claim 1, **characterised in that** the fastening elements are fed via a control unit and synchronised by the alignment and the extrusion process, the control unit being adjusted with respect to its clock signals which inter alia determine the spacings of the fastening elements.

3. Method according to claim 1, **characterised in that** the fastening elements are regulated by a control unit and fed to the feed unit, the spacings of the fastening elements taking into account a distance-measuring signal measured from the running extrudate and, on the other hand, being based on the spacing parameters stored in the control unit or adjustable thereon.

4. Method according to claim 1, **characterised in that** the fastening elements are incorporated into the extrudate loose as individual elements or combined together.

5. Device for large scale equipping of extrudates (6) with fastening elements (7), with an extrusion die (1) for forming an extrudate (6) and with a conveying and sorting system (2), the last outlet duct of which contains the loose fastening elements (7) aligned in the direct vicinity of the extrusion die (1) for their predetermined queuing position and has a synchronised feed (3a) and placing (3b) mechanism on the extrusion die (1), **characterised in that** the feed (3a) and placing (3b) mechanism is connected to a control unit (4) triggering the clock pulses and in turn directly connected to a distance measuring mechanism (5) which is filled to overflowing by the extrudate (6) and can be adjusted with respect to the clock signals.

6. Device according to claim 3, **characterised in that** the placing device (3b) has a form which during extrusion only presents the head of the fastening element (7) for moulding-in and moulding-over.

## Revendications

1. Procédé pour munir en série des produits d'extrusion d'éléments de fixation, qui sont amenés individualisés dans une position d'attente à l'outil d'extrusion et apportés dans le produit d'extrusion jusque sur la zone fonctionnelle et ainsi fixés dans le produit d'extrusion
**caractérisé en ce que** pendant le processus d'extrusion des éléments de fixation, la tête vient se disposer à l'intérieur de la paroi d'extrusion et est amenée au produit d'extrusion au moyen d'une couverture par extrusion.

2. Procédé selon la revendication 1, **caractérisé en ce que** l'alimentation en éléments de fixation est modifiée pour être accordée à l'orientation et au processus d'extrusion par une unité de commande, dont on règle les signaux de synchronisation prescrivant entre autres les intervalles entre les éléments de fixation.

3. Procédé selon la revendication 1, **caractérisé en ce que** les éléments de fixation sont amenés de manière régulée à l'unité d'alimentation par l'intermédiaire d'une unité de commande, les intervalles entre les éléments de fixation reposant sur la prise en compte d'un signal de mesure de déplacement prélevé sur le produit d'extrusion circulant et d'autre part sur les prescriptions de distance stockées dans l'unité de commande ou réglables dans celle-ci.

4. Procédé selon la revendication 1, **caractérisé en ce que** les éléments de fixation sont enfoncés en éléments individuels en vrac ou liés les uns aux autres dans le produit d'extrusion.

5. Dispositif pour munir en série des produits d'extrusion (6) d'éléments de fixation (7), comportant un outil d'extrusion (1) pour former un produit d'extrusion (6) et un système (2) de transport et de triage, dont le dernier canal d'ouverture contient les éléments de fixation (7) en vrac, à proximité directe de l'outil d'extrusion (1), orientés pour leur position d'attente prévue, et dispose également d'un organe d'alimentation (3a) et de placement (3b) synchrone sur l'outil d'extrusion (1), **caractérisé en ce que** l'organe d'alimentation (3a) et de placement (3b) est relié à une unité de commande (4), qui déclenche les impulsions de synchronisation, qui est de son côté raccordée directement à un dispositif de mesure de déplacement (5) dépassant du produit d'extrusion et qui peut être réglée en ce qui concerne les signaux de synchronisation.

6. Dispositif selon la revendication 3, **caractérisé en ce que** l'organe de placement (3b) présente une forme ne chargeant pour la couverture par extrusion que la tête de l'élément de fixation (7) lors de l'extrusion.
